# EUROPÄISCHE PATENTSCHRIFT

(11) **EP 4 622 894 B1**
(45) Veröffentlichungstag und Bekanntmachung des Hinweises auf die Patenterteilung: **11.11.2026**
(21) Anmeldenummer: 23810036.6
(22) Anmeldetag: 21.11.2023
(51) Int. Cl.: B65G 17/02, B65G 15/42, B65G 15/60, B65G 17/12, B65G 39/20

(54) **FÖRDEREINRICHTUNG**
CONVEYING DEVICE
DISPOSITIF DE TRANSPORT

(30) Priorität: 23.11.2022 AT 508872022
(43) Veröffentlichungstag der Anmeldung: 01.10.2025
(73) Patentinhaber: Innova Patent GmbH, 6922 Wolfurt (AT)
(72) Erfinder: FRÜHSTÜCK, Hermann, 6922 Wolfurt (AT); BERCHTOLD, Thomas, 6878 Schwarzenberg (AT)
(74) Vertreter: Weiss Patentanwalts GmbH
(86) Internationale Anmeldenummer: PCT/EP2023/082499
(87) Internationale Veröffentlichungsnummer: WO 2024/110443

(56) Entgegenhaltungen:
- DE-C- 502 639
- US-A- 1 750 425

## Beschreibung

Die gegenständliche Erfindung betrifft eine Fördereinrichtung mit einem endlosen Fördergurt an dem in Förderrichtung des Fördergurtes verteilt an beiden Seiten eine Vielzahl von Tragrollen drehbar gelagert angeordnet sind, wobei Tragrollen entlang einer Förderstrecke der Fördereinrichtung zumindest abschnittsweise an Tragelementen abrollen, wobei in einem geführten Förderabschnitt der Fördereinrichtung an zumindest einer Seite eines Obergurtes und/oder Untergurtes des Fördergurtes ein Stützelement vorgesehen ist, das sich im geführten Förderabschnitt in Förderrichtung erstreckt, wobei am Fördergurt auf der Seite des Stützelements zumindest eine Führungsklemme angeordnet ist, die das Stützelement in einer geschlossenen Lage in einem Führungsbereich umgreift, und die das Stützelement in einer offenen Lage freigibt, und wobei an der Führungsklemme ein Klemmenantrieb angeordnet ist, mit dem die Führungsklemme in die offene oder geschlossene Lage bringbar ist. Fördereinrichtungen in Form eines Stetigförderers, beispielsweise Förderbänder, sind für den Materialtransport hinlänglich bekannt. Bei solchen Stetigförderern wird ein endloser Fördergurt über Umlenkrollen geführt, wobei zwischen den beiden Umlenkrollen üblicherweise eine Vielzahl von Tragrollen angeordnet sind, um den Fördergurt, entweder der Obergurt und gegebenenfalls auch der Untergurt, zu unterstützen. Der Obergurt bezeichnet üblicherweise den Teil des Fördergurtes auf dem das zu fördernden Material zu liegen kommt, während der Untergurt üblicherweise den Teil des Fördergurtes im Bereich der Rückführung bezeichnet. Es gibt allerdings auch Stetigförderer, bei denen auch am Untergurt Material gefördert wird. Zumindest je eine Umlenkrolle ist in einer Beladestation und in einer Entladestation angeordnet, zwischen denen das Material gefördert wird.

Es sind Fördereinrichtungen mit umlaufenden Fördergurten bekannt, bei denen der Fördergurt bewegt wird, indem ein Bauteil des Fördergurtes lösbar auf ein Zugmittel geklemmt wird. Beispiele für solche Fördereinrichtungen können der US 2007/0074955 A1, der US 4,766,994 A, der DE 1 203 672 B oder der DE 31 29 072 A1 entnommen werden.

Es sind auch Stetigförderer mit einem umlaufenden Fördergurt bekannt, bei denen am Fördergurt Tragrollen drehbar gelagert angeordnet sind, wobei die Tragrollen an Tragseilen abrollen, die zwischen zwei Endpunkten der Förderstrecke des Stetigförderers gespannt sind. Der Vorteil bei solchen Anlagen ist darin zu sehen, dass mit den Tragseilen sehr große Spannweiten realisierbar sind und damit entlang der Förderstrecke nur wenige Stützen für die Tragseile benötigt werden. Auch bei solchen Stetigförderern wird der Fördergurt in den Endstationen über Umlenkrollen geführt. Beispiele für solche Stetigförderer können der EP 1 538 112 B1, der EP 1 338 531 B1 oder der EP 2 030 919 B1 entnommen werden.

DE 502 638 C , welches die Merkmale des Oberbegriffs des Anspruchs 1 offenbart, zeigt einen Stetigförderer mit einem umlaufenden Fördergurt, wobei am Fördergurt Wagen mit Tragrollen angeordnet sind und die Tragrollen an Schienen abrollen. Zusätzlich ist ein umlaufendes Zugseil vorgesehen, auf das die Wagen geklemmt werden können. Über das umlaufende Zugseil werden die Wagen und damit der Fördergurt bewegt. Schwingungen des Fördergurtes lassen sich so nicht unterdrücken.

Oftmals ist es in Förderanwendungen auch erforderlich eine Höhendifferenz zu überwinden. Bei großen Höhendifferenzen kommen dabei insbesondere Vertikalförderer zur Anwendung, bei denen der Fördergurt im Wesentlich vertikal angeordnet ist, weil diese eine geringe Grundfläche benötigen. Solche Vertikalförderer mit sehr großen Förderhöhen im Bereich von einigen hundert Metern kommen beispielsweise im Bergwerksbereich zum Einsatz, um Material aus dem Bergwerk an die Oberfläche zu fördern. Kleinere Förderhöhen sind beispielsweise bei Umschlageinrichtungen, beispielsweise Schiffsentladevorrichtungen in einem Hafen, anzutreffen. Bei solchen Vertikalförderern kann auch in beide Richtungen gefördert werden, beispielsweise bei Umschlageinrichtungen für Güter oder Materialien.

Ein Beispiel für einen Vertikalförderer ist US 5,392,897 A zu entnehmen, die einen Vertikalförderer zeigt, bei dem zwei Fördergurte verwendet werden, die einander zugewandt angeordnet sind, sodass sich die beiden Obergurte im vertikalen Förderabschnitt berühren. Das zu fördernde Material wird zwischen den beiden Obergurten eingeschlossen und damit vertikal nach oben gefördert. Hierfür ist ein Obergurt über Stützrollen zickzack-förmig geführt, wobei die Stützrollen kettenförmig miteinander verbunden sind. Wenn diese kettenförmige Anordnung in Längsrichtung gespannt wird, dann wird dadurch der zughörige Obergurt gegen den gegenüberliegenden Obergurt gepresst, um das zu fördernde Material sicher zwischen den beiden Obergurten zu halten.

Aus der EP 1 102 715 B1 ist ein Vertikalförderer bekannt, mit einem Fördergurt, an dem eine Vielzahl von Tragorganen zur Aufnahme eines Fördergutes befestigt ist. Der Fördergurt selbst besteht aus einer Anzahl von Zugorganen und einer Anzahl von Führungsseilen und wird über eine Anzahl von Umlenkscheiben und Führungsseilscheiben geführt. Aufgrund der mitunter sehr großen Länge des Fördergurtes im vertikalen Bereich, ist eine horizontale Auslenkung (in dieser Richtung hat der Fördergurt praktisch keine Steifigkeit) möglich und problematisch. Dabei kann es zu Schwingungen des Fördergurtes kommen und der Fördergurt kann auch Teile des Schachtes, in dem dieser angeordnet ist, berühren, was zu Beschädigungen am Fördergurt oder am Schacht führen kann. Nicht zuletzt kann durch solche Schwingungen auch gefördertes Material aus dem Fördergurt herausfallen und im Schacht nach unten fallen, was ebenfalls zu Beschädigungen und Anlagenstillständen führen könnte. Im vertikalen Förderbereich sind daher in der EP 1 102 715 B1 Führungsseilscheiben und ein stationäres Führungsgehäuse vorgesehen, um eine horizontale Auslenkung des Fördergurtes zu vermeiden.

Bei derartigen Vertikalförderern wird unter Umständen ein sehr tiefer vertikaler Schacht benötigt, in dem der Vertikalförderer angeordnet wird. Je größer die notwendige Grundfläche des vertikalen Schachts wird, umso aufwendiger ist jedoch dessen Herstellung, beispielsweise durch Bohren des Schachtes. Wenn im Schacht nun Wartungsteile, wie beispielsweise Führungselemente wie in der EP 1 102 715 B1 beschrieben, angeordnet werden müssen, dann müssen diese natürlich für Wartungspersonal zugänglich sein, was den Aufwand für einen solchen Vertikalförderer erheblich erhöht. Abgesehen von der relativ aufwendigen Wartung solcher Führungselemente, ist deshalb von vornherein auch ein größerer Schacht erforderlich.

Aus der WO 2019/192983 A1 ist eine Fördereinrichtung mit Tragrollen am Förderband mit einem vertikalen Förderbereich bekannt, in dem an beiden Seiten des Fördergurtes eine Anzahl von vertikalen Stützelementen angeordnet ist, an denen am Fördergurt angeordnete Tragrollen abrollen. Damit ergibt sich eine sichere Führung des Fördergurtes im vertikalen Förderabschnitt an den Stützelementen, womit auch sehr große Höhendifferenzen im Bereich von einigen hundert Metern realisiert werden können. Ein Vorteil dieser Ausführung liegt darin, dass im vertikalen Förderabschnitt lediglich die Stützelemente angeordnet werden müssen, womit im vertikalen Förderabschnitt praktisch keine Wartungsteile, die alle am Fördergurt selbst angeordnet sind, benötigt werden. Das ermöglicht es auch, den vertikalen Förderabschnitt mit einer sehr kleinen Querschnittsfläche herzustellen. Insbesondere bei zwei Stützelementen auf jeder Seite pro Gurt des Fördergurtes, also in Summe acht Stützelemente, wird die Führung aber technisch aufwendig, insbesondere im Bereich des Übergangs vom horizontalen Förderbereich in den vertikalen Förderbereich.

Eine Fördereinrichtung kann sich über eine lange Strecke erstrecken entlang der die Tragrollen des Fördergurts auf einem zugeordneten Tragelement abrollen. Aufgrund von Stößen auf den Fördergurt, ungleichmäßiger Beladung des Fördergurtes mit Fördergut oder einem Auslenken des Fördergurtes in einer Richtung normal auf die Fläche des Fördergurtes, was typischerweise in einem vertikalen Förderbereich auftreten kann, besteht die Gefahr von Schwingungen des Fördergurtes und in Förderstrecken auf dem die Tragrollen auf Tragelementen abrollen auch die Gefahr des Entgleisens der Tragrollen vom zugeordneten Tragelement. Beides ist für einen ordnungsgemäßen Betrieb der Fördereinrichtung unerwünscht und daher möglichst zu vermeiden ist. Unter dem "Entgleisen" wird verstanden, dass ein Tragelement aus der Tragrolle springt und damit die Führung des Fördergurtes in Förderrichtung nicht mehr gegeben ist. Unter "Schwingungen des Fördergurtes" wird verstanden, dass sich ein Obergurt und/oder Untergurt des Fördergurtes in einer bestimmten Richtung, vor allem in Hochrichtung des Fördergurtes, bewegt. Daher ist eine Vorkehrung erforderlich, um solche Schwingungen und gegebenenfalls das Entgleisen des Fördergurtes zu verhindern.

Es ist daher die Aufgabe der gegenständlichen Erfindung eine Fördereinrichtung mit einem Fördergurt und auf einem Tragelement abrollenden Förderrollen anzugeben, bei der der Fördergurt einfach und sicher geführt ist, um insbesondere ein Aufschwingen des Fördergurtes, und gegebenenfalls ein Entgleisen des Fördergurtes, zu vermeiden.

Diese Aufgabe wird erfindungsgemäß dadurch gelöst, dass zwischen dem Stützelement und der geschlossenen Führungsklemme im Führungsbereich ein Spiel vorgesehen ist, sodass die Führungsklemme ohne Einklemmen des Stützelements am Stützelement geführt ist. Die Führung des Fördergurtes durch die Führungsklemme und das Stützelement ist damit unabhängig vom Zusammenwirken der Tragrollen und des Tragelements. Die geschlossene Führungsklemme umfasst im geführten Förderabschnitt das Stützelement und sorgt damit für eine sichere Führung des Fördergurtes und verhindert ein Aufschwingen und gegebenenfalls auch ein Entgleisen des Fördergurtes. Durch die Führung des Fördergurtes mit Hilfe der Führungsklemmen wird in einem Förderabschnitt, in dem die Tragrollen und das Tragelemente zusammenwirken, gleichzeitig sichergestellt, dass die Tragrollen sicher am zugehörigen Tragelement abrollen.

In einer vorteilhaften und einfach umzusetzenden Ausgestaltung ist an der Führungsklemme ein bewegter Klemmenteil vorgesehen, wobei der Klemmenantrieb zum Öffnen oder Schließen der Führungsklemme den bewegten Klemmenteil bewegt. Die Bewegung des bewegten Klemmenteils kann auf vielfältige Weise realisiert werden, beispielsweise als Drehbewegung oder Linearbewegung oder auch als Kombination davon.

Die Bewegung kann einfach und flexibel umgesetzt werden, wenn an der Führungsklemme ein Klemmenmechanismus vorgesehen ist, wobei der Klemmenantrieb zum Öffnen oder Schließen der Führungsklemme auf den Klemmenmechanismus wirkt.

Der Klemmenantrieb kann einen Antrieb umfasst, der zum Öffnen oder Schließen der Führungsklemme auf den bewegten Klemmenteil wirkt, gegebenenfalls auch über den Klemmenmechanismus. Für den Antrieb ist vorteilhafterweise ein Energiespeicher vorgesehen, der den Antrieb mit Energie zum Öffnen oder Schließen der Führungsklemme versorgt. Damit kann der Antrieb für eine gewisse Zeitdauer mit Energie versorgt werden.

Alternativ ist der Klemmenantrieb passiv ausgeführt, mit einem Klemmenbetätigungsteil an der Führungsklemme, der zum Öffnen oder Schließen der Führungsklemme auf den bewegten Klemmenteil wirkt, wobei im geführten Förderabschnitt der Fördereinrichtung ein stationärer Betätigungsteil vorgesehen ist, der beim Vorbeibewegen der Führungsklemme am stationären Betätigungsteil mit dem Klemmenbetätigungsteil zusammenwirkt, um den Klemmenbetätigungsteil zum Öffnen oder Schließen der Führungsklemme zu betätigen. Ein solcher passiver Klemmenantrieb kann besonders einfach realisiert werden und ermöglicht eine sichere Betätigung der Führungsklemme.

In einer möglichen Ausführung ist der Klemmenbetätigungsteil als zumindest eine drehbar an der Führungsklemme gelagerte Betätigungsrolle oder als Gleitelement ausgeführt ist und der stationäre Betätigungsteil als sich in Förderrichtung erstreckende Betätigungsschiene ausgeführt ist, an der die Betätigungsrolle abrollt oder das Gleitelement abgleitet.

Ein Aufschwingen des Fördergurtes kann noch besser unterdrückt werden, wenn im Bereich des stationären Betätigungsteils zusätzlich ein Tragelement vorgesehen ist, auf dem eine Tragrolle des Fördergurtes abrollt, wenn der Klemmenbetätigungsteil mit dem Betätigungsteil zusammenwirkt.

In einer vorteilhaften, konstruktiv einfachen Ausgestaltung umfasst die Führungsklemme zwei Klemmbacken, wobei die Klemmbacken einander gegenüberliegend angeordnet sind, wobei zumindest eine der Klemmbacken als bewegter Klemmenteil ausgeführt ist und mit dem Klemmenantrieb in die geschlossene Lage, in der die Klemmbacken das Stützelement umgreifen, und in die geöffnete Lage, in der die Klemmbacken das Stützelement freigeben, bringbar ist. Hierbei ist es auch vorteilhaft, wenn an sich gegenüberstehenden und einander zugewandten Backenflächen der Klemmbacken jeweils eine Backenausnehmung vorgesehen ist, die den Führungsbereich der Führungsklemme ausbilden und das Stützelement in der geschlossenen Lage in den Backenausnehmungen der Klemmbacken angeordnet ist. Das ermöglicht ein sicheres Umfassen des Stützelements zur Führung des Fördergurtes.

Wenn an der Führungsklemme eine Halteelement vorgesehen ist, das die Führungsklemme durch eine Haltekraft des Halteelements selbsttätig in der geschlossenen oder offenen Lage hält, kann sichergestellt werden, dass sich die Führungsklemme nicht von selbst öffnen oder schließen kann, beispielsweise durch Schwingungen des Fördergurtes oder andere auf den Fördergurt wirkende Kräfte. Das erhöht die Betriebssicherheit der Führungsklemme.

Eine konstruktiv einfache Ausführung einer Führungsklemme zeichnet sich dadurch aus, dass der Klemmenmechanismus zumindest einen Klemmhebel aufweist, wobei der zumindest eine Klemmhebel an einem ersten Ende an einer Klemmenbasis der Führungsklemme um eine Drehachse drehbar gelagert angeordnet ist und am jeweils gegenüberliegenden zweiten Ende des zumindest einen Klemmhebels der bewegte Klemmenteil, vorzugsweise eine Klemmbacke, angeordnet ist. Hierbei ist es auch vorteilhaft, wenn ein Halteelement auf den zumindest einen Klemmhebel wirkt.

Im Falle eines passive Klemmenantriebs ist es vorteilhaft, wenn am zweiten Ende des zumindest einen Klemmhebels zwei Hebelarme vorgesehen sind, zwischen denen der Führungsbereich der Führungsklemme ausgebildet ist und an einem ersten Hebelarm der bewegte Klemmenteil, vorzugsweise eine die Klemmbacke, angeordnet ist und an einem zweiten Hebelarm der Klemmenbetätigungsteil zum Betätigen des Klemmmechanismus angeordnet ist. Das ermöglicht eine kompakte Ausführung der Führungsklemme.

Die gegenständliche Erfindung wird nachfolgend unter Bezugnahme auf die Figuren 1 bis 11 näher erläutert, die beispielhaft, schematisch und nicht einschränkend vorteilhafte Ausgestaltungen der Erfindung zeigen. Dabei zeigt
Fig.1 eine Darstellung eines Vertikalförderers,
Fig.2 einen Schnitt durch einen Fördergurt des Vertikalförderers,
Fig.3 eine Ansicht einer ersten Endstation des Vertikalförderers,
Fig.4 eine Ansicht einer zweiten Endstation des Vertikalförderers,
Fig.5 eine Ansicht des vertikalen Förderbereichs des Vertikalförderers mit erfindungsgemäßer Führung durch Führungsklemmen und einem Stützelement,
Fig.6 eine Detailansicht einer Ausgestaltung einer Führungsklemme,
Fig.7 eine geöffnete Führungsklemme in einem geführten Förderabschnitt,
Fig.8 die Umlenkung eines Stützelements am Beginn oder Ende eines geführten Förderabschnitts,
Fig.9 einen geführten Förderabschnitt mit Tragelementen und einem Stützelement,
Fig.10 einen aktiven Klemmenantrieb der Führungsklemme und
Fig.11 einen passiven Klemmenantrieb der Führungsklemme.

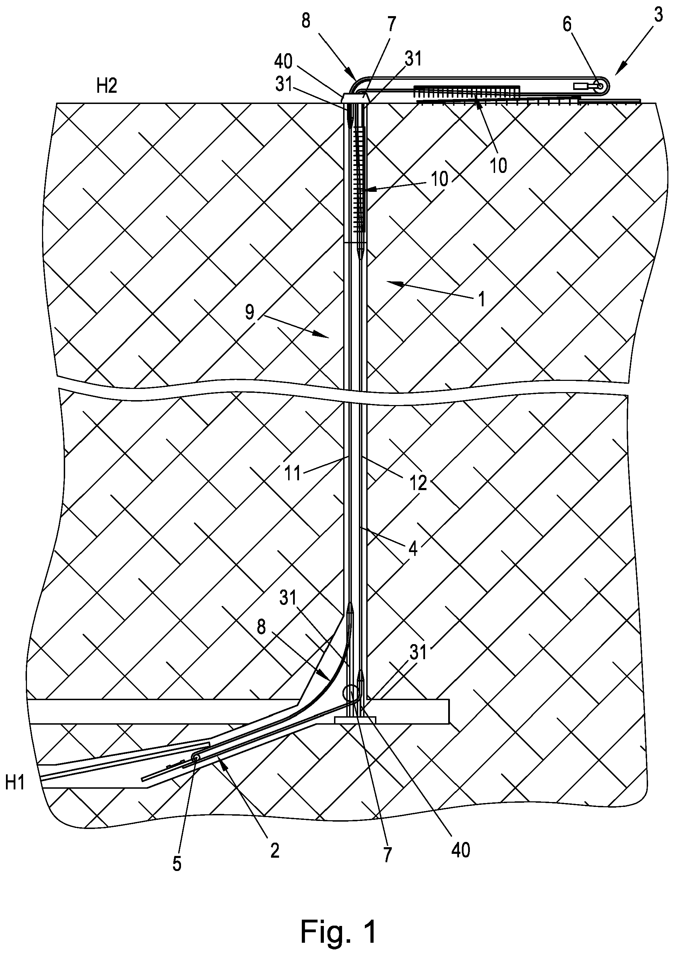

Die Erfindung betrifft eine Fördereinrichtung 1, vorzugsweise mit einem vertikalen Förderbereich wie in Fig.1 dargestellt, in diesem Ausführungsbeispiel in einem Bergwerk. Die Fördereinrichtung 1 umfasst einen umlaufenden endlosen Fördergurt 4.

Auf einem ersten Höhenniveau H1, in diesem Ausführungsbeispiel unter Tag, ist eine Beladestation 2 als erste Endstation der Fördereinrichtung 1 vorgesehen, an der zu förderndes Fördergut, beispielsweise Schüttgut, auf den umlaufenden endlosen Fördergurt 4 der Fördereinrichtung 1 geladen wird. Wie das Fördergut auf den Fördergurt 4 geladen wird, ist für die Erfindung unerheblich. Auf einem anderen zweiten Höhenniveau H2, beispielsweise an der Oberfläche oder auch unter Tag, ist eine Entladestation 3 als zweite Endstation der Fördereinrichtung 1 vorgesehen, an der das Fördergut vom Fördergurt 4 entladen wird. Für die Erfindung ist es ebenso unerheblich, wie das Fördergut an der Entladestation 3 entladen wird. Die Differenz zwischen erstem Höhenniveau H1 und zweiten Höhenniveau H2 ergibt im Wesentlichen die Höhendifferenz, die mit der Fördereinrichtung 1 zu überwinden ist. Die erfindungsgemäße Fördereinrichtung 1 muss aber nicht zwingend einen vertikalen Förderbereich wie in Fig.1 umfassen.

Der endlose Fördergurt 4 der Fördereinrichtung 1 läuft zwischen Beladestation 2 und Entladestation 3 um, wofür im Bereich der Beladestation 2 eine erste Umkehrrolle 5 und im Bereich der Entladestation 3 eine zweite Umkehrrolle 6 angeordnet sind, über die der Fördergurt 4 läuft. Zumindest eine der Umkehrrollen 5, 6 ist in hinlänglich bekannter Weise angetrieben, um den Fördergurt 4 im Kreis umlaufen zu lassen. Der Fördergurt 3 kann aber auch anders angetrieben sein.

Die Förderrichtung der Fördereinrichtung 1, also beispielsweise von unten nach oben oder umgekehrt, ist aber an sich beliebig und hängt nur von der Drehrichtung des Antriebs ab. Ebenso kann entweder nur im Obergurt 11 oder gleichzeitig im Obergurt 11 und im Untergurt 12 gefördert werden. Das kann bedarfsweise auch geändert werden.

Entlang der Förderstrecke der Fördereinrichtung 1 können bedarfsweise noch Umlenkrollen 7 und/oder Umlenkbereiche 8 vorgesehen, um die Orientierung des endlosen Fördergurts 4 an die Anforderungen anzupassen. Im dargestellten Ausführungsbeispiel ist der Fördergurt 4 im Bereich der Beladestation 2 leicht schräg nach oben ausgerichtet. In einem Umlenkbereich 8 erfolgt der Übergang in einen vertikalen Förderbereich, in dem der Obergurt 11 des Fördergurts 4 im Wesentlichen vertikal verläuft. Im Bereich der Entladestation 3 erfolgt eine erneute Umlenkung des Obergurts 11 des Fördergurtes 4 in eine im Wesentlichen horizontale Ausrichtung. Der Untergurt 12 des Fördergurtes 4 wird vorzugsweise im Wesentlichen parallel zum Obergurt 11 rückgeführt. Natürlich kann die Streckenführung des Fördergurts 4 entlang der gesamten Förderstrecke auch beliebig anders ausgestaltet sein. In der Fördereinrichtung 1 muss aber nicht zwingend ein vertikaler Förderbereich vorhanden sein. In diesem Fall könnte man auch ohne Umlenkrollen 7 und/oder Umlenkbereiche 8 auskommen.

In diesem Zusammenhang und im Kontext der Erfindung ist "vertikal" hinsichtlich der Ausrichtung des Fördergurtes 4 im vertikalen Förderbereich allerdings nicht strikt als senkrecht zu verstehen. Der Fördergurt 4 kann grundsätzlich auch um einen gewissen Winkel gegenüber einer Senkrechten geneigt sein. Bei den angestrebten sehr großen Höhendifferenzen von einigen hundert Metern kann aber jedes Grad Neigung des Fördergurtes 4 eine notwendige Aufweitung des vertikalen Förderbereiches um einige Meter bedeuten. Wird der vertikale Förderbereich gebohrt, würde das die Bohrkosten deutlich in die Höhe treiben. Der vertikale Förderbereich selbst kann gegenüber einer Senkrechten aber auch um einen Winkel schräg ausgerichtet sein, womit die Querschnittsfläche des vertikalen Förderbereiches trotz schräg ausgerichtetem Fördergurt 4 wieder klein gehalten werden könnte. Allerdings sind auch hier fertigungstechnische Grenzen gesetzt. Beispielsweise liegt die bohrtechnische Grenze bei ca. 70° Schrägstellung. Somit wird im Sinne des erfindungsgemäßen Vertikalförderers unter "vertikal" eine Ausrichtung des Fördergurts 4 von ±20° um die Senkrechte verstanden.

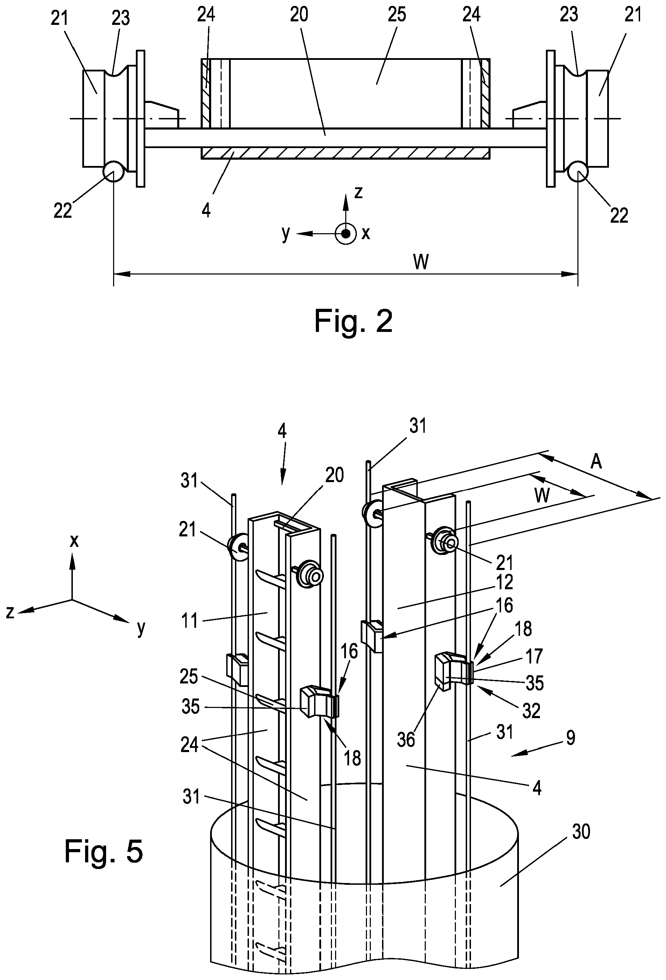

In Fig.2 ist ein Querschnitt durch den Fördergurt 4 der Fördereinrichtung 1 dargestellt. Am Fördergurt 4 sind in Längsrichtung x (die der Förderrichtung des Fördergurtes 4 entspricht) beabstandet voneinander eine Vielzahl von Querbalken 20 vorgesehen, die über die Breite des Fördergurt 4 hinausragen und an deren axialen Enden jeweils eine Tragrolle 21 drehbar gelagert angeordnet ist. Die Tragrollen 21 können aber auch in anderer geeigneter Weise am Fördergurt drehbar gelagert angeordnet sein. Laufflächen 23 der Tragrollen 21 laufen auf Tragelementen 22, wie beispielsweise Seilen, Rohren, Rundstäben, Schienen, etc., ab, die zumindest abschnittsweise entlang der Förderstrecke der Fördereinrichtung 1 vorgesehen sind. Die Tragrollen 21 laufen damit zumindest abschnittsweise auf den Tragelemente 22 ab. Der axiale Abstand zwischen den Laufflächen 23 bestimmt die Spurweite W der Tragrollen 21, die natürlich mit der Tragelementspurweite der Tragelemente 22 übereinstimmt.

Am Fördergurt 4 können außerdem an beiden Seiten seitliche Begrenzungswände 24 angeordnet sein, die vom Fördergurt 4 abstehen, um eine rinnenförmige Aufnahme für das Fördergut zu schaffen. Nachdem der Fördergurt 4 entlang der Förderstrecke üblicherweise mehrmals umgelenkt wird, sind die Begrenzungswände 24 vorzugsweise so ausgeführt, dass diese eine gewisse Längsausdehnung oder Biegung zulassen, beispielsweise als bekannte Wellkanten oder mit Schlitzen in Richtung der freien Enden der Begrenzungswände 24.

Aufgrund der Führung des Fördergurtes 4 über Umkehrrollen 5, 6 und aufgrund der Begrenzungswände 24 am Fördergurt 4 kann es auch erforderlich sein, den Fördergurt 4 vor einer Umlenkung zu wenden, da der Fördergurt 4 an der Seite mit den Begrenzungswänden 14 natürlich nicht über eine Umlenkrolle 7 geführt werden kann. In der Fig.1 sind hierfür beispielsweise Wendestationen 10 für den Untergurt 12 vorgesehen, die wie in der EP 1 338 531 B1 beschrieben ausgeführt sein können, und die den Fördergurt 4 in Längsrichtung gesehen jeweils um 180° drehen. Eine Wendestation 10 kann aber natürlich auch an anderer Stelle als in Fig.1 dargestellt vorgesehen sein, beispielsweise vor der unteren Umlenkrolle 7 des Untergurtes 12 in Fig.1.

Am Fördergurt 4 können auf der Seite der Begrenzungswände 24 über die Länge des Fördergurt 4 verteilt eine Vielzahl von Trennwänden 25 zwischen den Begrenzungswänden 24 vorgesehen sein, um das Fördergut im vertikalen Förderbereich halten zu können. Selbstverständlich kann der Fördergurt 4 zur Aufnahme des Förderguts auch anders ausgeführt sein.

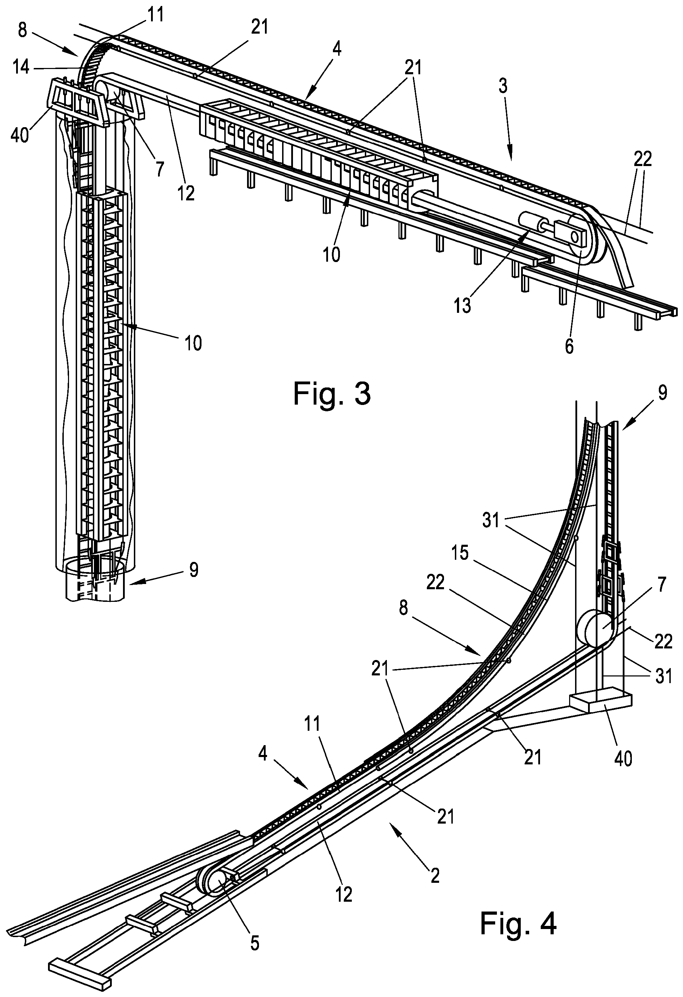

Mit Fig.3 ist eine Detailansicht des Bereichs einer Entladestation 3, in diesem Ausführungsbeispiel im Anschluss an einen vertikalen Förderbereich wie in Fig.1, dargestellt. Darin ist der Antrieb 13 zu erkennen, der die Umkehrrolle 6 antreibt. Ebenso ist zu erkennen, dass im Umkehrbereich 8 für den Obergurt 11 des Fördergurtes 4 eine Vielzahl von Stützrollen 14 bogenförmig angeordnet sind, um den Fördergurt 4 großflächig zu stützen und somit die Belastung auf den mit Fördergut gefüllten Obergurt 11 des Fördergurtes 4 zu reduzieren. Ebenso sind in Fig.3 die Tragelemente 22, beispielsweise gespannte Seile oder Stäbe, Schienen usw., angedeutet, an denen die Tragrollen 21 des Fördergurtes 4 in der Entladestation 3 abrollen. Der Untergurt 12 kann nach einer Wende um 180° in einer Wendestation 10 über eine einfache Umlenkrolle 7 in den vertikalen Förderbereich umgelenkt werden. Im vertikalen Förderbereich erfolgt in dieser Ausführung nach der Umlenkrolle 7 in einem weiteren Wendestation 10 erneut eine Wende um 180° des Untergurts 12.

Fig.4 zeigt den Bereich einer Beladestation 2, in diesem Ausführungsbeispiel vor einem vertikalen Förderbereich wie in Fig.1, im Detail. Auch hier ist zu erkennen, dass der stark belastete Obergurt 11 des Fördergurtes 4 vorzugsweise über einen bogenförmigen, sehr langgestreckten Umlenkbereich 8 umgelenkt wird, während der Untergurt 12 wieder über eine Umlenkrolle 7 umgelenkt wird. Der Umlenkbereich 8 ist beispielsweise mit gebogen Rohren 15 als Tragelemente 22 ausgeführt, die an einer ortsfesten Struktur angeordnet sind, wobei die Tragrollen 21 des Fördergurtes 4 im Umlenkbereich 8 an den gebogenen Rohren 15 abrollen. Im Umlenkbereich 8 sollten vorzugsweise mehrere Tragrollen 21 gleichzeitig an einem Tragelement 22 abrollen. Ansonsten sind wieder weitere Tragelemente 22 angedeutet, an denen die Tragrollen 21 des Fördergurtes 4, hier des Untergurts 12, in der Beladestation 2 abrollen.

Es sei nur der Vollständigkeit halber erwähnt, dass die Beladung auch oder zusätzlich oben und die Entladung auch oder zusätzlich unten erfolgen könnte, was aber an der gegenständlichen Erfindung nichts ändern würde.

Die Fördereinrichtung 1 kann sich über eine lange Förderstrecke erstrecken, entlang der die Tragrollen 21 des Fördergurts 4 zumindest abschnittsweise auf einem zugeordneten Tragelement 22 abrollen. Aufgrund von Stößen auf den Fördergurt 4, ungleichmäßiger Beladung des Fördergurtes 4 mit Fördergut, einem Auslenken des Fördergurtes 4 in einer Richtung normal auf die Fläche des Fördergurtes 4 (auch als Hochrichtung z bezeichnet (Fig.2)), was typischerweise in einem vertikalen Förderbereich auftreten kann, oder aufgrund anderer äußerer Einflüsse auf den Fördergurt 4, besteht die Gefahr des Aufschwingens des Fördergurtes 4 und in Abschnitten an denen die Tragrollen 21 an einem zugeordneten Tragelement 22 abrollen auch die Gefahr des Entgleisens der Tragrollen 21 vom zugeordneten Tragelement 22. Schwingungen des Fördergurtes 4 und ein Entgleisen des Fördergurtes 4 sind für einen ordnungsgemäßen Betrieb der Fördereinrichtung 1 unerwünscht und sollen möglichst vermieden werden. Unter dem "Entgleisen" wird verstanden, dass ein Tragelement 22 aus einer Tragrolle 21 springt, beispielsweise aus der Lauffläche 23 der Tragrolle 21, und damit die Führung des Fördergurtes 4 in Förderrichtung x nicht mehr gegeben ist. Unter "Schwingungen des Fördergurtes" oder unter "Aufschwingen des Fördergurtes 4" wird verstanden, dass sich ein Obergurt 11 und/oder Untergurt 12 des Fördergurtes 4 in einer bestimmten Richtung, vor allem in Hochrichtung z des Fördergurtes 4, hin und her bewegt. Daher ist eine Vorkehrung erforderlich, um den Fördergurt 4 zu führen und insbesondere das Aufschwingen und gegebenenfalls auch das Entgleisen zu verhindern. Die Gefahr des Aufschwingens des Fördergurtes 4 oder des Entgleisens des Fördergurtes 4 muss dabei nicht überall entlang der Fördereinrichtung 1 bestehen und auch nicht im gleichen Ausmaß. Es ist daher erfindungsgemäß ausreichend, wenn das Aufschwingen und das Entgleisen des Fördergurtes 4 zumindest in einem geführten Förderabschnitt 9 der Fördereinrichtung 1 verhindert wird.

Um den Fördergurt 4 in einem bestimmten geführten Förderabschnitt 9 der Fördereinrichtung 1, beispielsweise im vertikalen Förderbereich oder in einem Förderbereich im Bereich der Entladestation 3 oder Beladestation 2 oder einen beliebigen anderen Förderbereich der Förderstrecke, einfach und sicher zu führen, ist im geführten Förderabschnitt 9 erfindungsgemäß für den Obergurt 11 und/oder den Untergurt 12, an zumindest einer Seite des Fördergurtes 4 (in Förderrichtung x gesehen) ein Stützelement 31 angeordnet, das im Wesentlichen parallel zum Fördergurt 4 in diesem geführten Förderabschnitt 9 ausgerichtet ist. In einem vertikalen Förderbereich ist das Stützelement 31 damit ebenfalls vertikal (wieder ±20° um die Senkrechte) ausgerichtet, wie in Fig.5 dargestellt. Das Stützelement 31 kann ein starres Konstruktionsteil sein, wie beispielsweise ein Rohr, eine Schiene, ein Stab, etc., oder kann bevorzugt auch als gespanntes Seil ausgeführt sein.

In einer bevorzugten Ausgestaltung ist im geführten Förderabschnitt 9 am Obergurt 11 und am Untergurt 12 des Fördergurts 4 in Förderrichtung x gesehen jeweils an beiden Seiten ein Stützelement 31 vorgesehen, wie in Fig.5 dargestellt.

Ein Stützelement 31 ist in der Fördereinrichtung 1 stationär angeordnet, beispielsweise in Form eines abgespannten Seiles oder einer stationären Schiene.

Die Erfindung wird im nachfolgenden am Ausführungsbeispiel eines geführten Förderabschnitts 9 im vertikalen Förderbereich der Fördereinrichtung 1 beschrieben, wobei diese Ausführungen in gleicher Weise auch für einen beliebigen anderen Förderbereich gelten, beispielsweise einen horizontalen Förderbereich im Bereich einer Entladestation 3 oder einen ansteigenden Förderbereich im Bereich einer Beladestation 2, wie in Fig.3 und 4 dargestellt.

Fig.5 zeigt einen Teil des vertikalen geführten Förderabschnittes 9 der Fördereinrichtung 1, der in diesem Ausführungsbeispiel beispielsweise in einer etwa kreisrunden, vertikalen Bohrung 30 angeordnet ist. Selbstverständlich könnte auch jeweils eine in etwa kreisrunde, vertikale Bohrung 30 für den Obergurt 11 und Untergurt 12 vorgesehen sein. Ein vertikal geführter Förderabschnitt muss aber nicht zwingend in einem Stollen angeordnet sein, sondern kann beispielsweise auch freistehend angeordnet sein, beispielsweise an einer Klippe. Am Obergurt 11 des Fördergurtes 4 sind darin auch die Begrenzungswände 24 und die Trennwände 25 erkennbar. In diesem Ausführungsbeispiel sind für den Obergurt 11 und den Untergurt 12 zu beiden Seiten (in Längsrichtung x gesehen) jeweils ein Stützelement 31 vertikal angeordnet. Es wäre aber auch denkbar, dass ein Stützelement 31 nur an einer Seite des Obergurts 11 oder Untergurts 12 angeordnet ist. Es kann auch nur für den Obergurt 11 oder nur für den Untergurt 12 zumindest ein Stützelement 31 vorgesehen sein.

Ein Stützelement 31 kann auch mit einem Tragelement 22 zusammenfallen und kann auch derart angeordnet sein, dass eine Tragrolle 21 am Stützelement 31 abrollt. Vorzugsweise ist allerdings vorgesehen, dass eine Tragrolle 21 am Fördergurt 4 ohne Kontakt mit einem Stützelement 31 ist und folglich auch nicht am Stützelement 31 abrollt, womit ein Tragelement 22 und das Stützelement 31 separate Bauteile der Fördereinrichtung 1 sind. In dieser bevorzugten Ausführung dient ein Stützelement 31 ausschließlich der sicheren Führung des Fördergurt 4 und ein Tragelement 22 ausschließlich dem Abrollen der Tragrollen 21.

Im Ausführungsbeispiel nach Fig.5 ist der Abstand A der Stützelemente 31 in Querrichtung y (quer zur Förderrichtung x) im vertikalen geführten Förderabschnitt 9 unterschiedlich zur Spurweite W der Tragrollen 21 am Fördergurt 4. Vorzugsweise ist der Abstand A größer als die Spurweite W, wie in Fig.5. Bei einem Stützelement 31 an nur einer Seite des Fördergurtes 4 wird jeweils der halbe Abstand A und die halbe Spurweite W betrachtet. Damit kann eine Tragrolle 21 im geführten Förderabschnitt 9 nicht am Stützelement 31 abrollen. Das Stützelement 31 kann aber auch beliebig anders angeordnet sein, beispielsweise mit einem Abstand A kleiner der Spurweite W oder mit einem Versatz in Hochrichtung z (auch mit Abstand A gleich der Spurweite W).

Um den Fördergurt 4 am Stützelement 31 zu führen, ist auf der Seite des Fördergurtes 4, auf dem auch ein Stützelement 31 vorgesehen ist, am Fördergurt 4 eine Führungsklemme 16 angeordnet. In der Regel sind auf einer Seite des Fördergurtes 4 über die Länge des Fördergurtes 4 verteilt, eine Vielzahl von Führungsklemmen 16 am Fördergurt 4 angeordnet, beispielsweise im Abstand von einigen Metern.

Die zumindest eine Führungsklemme 16 am Fördergurt 4 bewegt sich mit dem Fördergurt 4 mit.

Eine geschlossene Führungsklemme 16 umgreift in einem Führungsbereich 32 das Stützelement 31 und führt damit den Fördergurt 4 entlang des Stützelements 31. "Umgreifen" bedeutet dabei, dass der Umfang des Stützelements 31 durch einen Teil der Führungsklemme 16 zumindest soweit umfasst wird, dass das Stützelement 31 nicht aus dem Führungsbereich 32 der geschlossenen Führungsklemme 16 herausgeführt werden kann. Eine offene Führungsklemme 16 gibt das Stützelement 31 frei, sodass die Führung aufgehoben ist.

Zwischen dem Stützelement 31 und der geschlossenen Führungsklemme 16 ist im Führungsbereich 32 ausreichendes Spiel vorgesehen, damit das Stützelement 31 von der Führungsklemme 32 nicht eingeklemmt wird, sondern darin nur geführt wird.

Das Spiel ermöglicht eine Relativbewegung zwischen einer geschlossenen Führungsklemme 16 und dem stationär in der Fördereinrichtung 1 angeordneten Stützelement 31. Im Betrieb der Fördereinrichtung 1 ergibt sich eine Relativbewegung zwischen einer geschlossenen Führungsklemmen 16 am in Förderrichtung x bewegten Fördergurt 4 und dem Stützelement 31.

Die Führungsklemme 16 umfasst einen Klemmenantrieb 35, mit dem die Führungsklemme 16 in die offene oder geschlossene Lage gebracht werden kann, vorzugsweise mittels eines Klemmenmechanismus 18.

Der Klemmenantrieb 35 wirkt zum Öffnen oder Schließen auf den Klemmenmechanismus 18. Der Klemmenmechanismus 18 umfasst vorzugsweise zumindest einen bewegten Klemmenteil 17, der zum Öffnen oder Schließen der Führungsklemme 16 bewegt wird.

Der Klemmenantrieb 35 kann aktiv oder passiv ausgeführt sein. Bei einem aktiven Klemmenantrieb 35 umfasst die Führungsklemme 16 alle Bauteile zum Öffnen oder Schließen der Führungsklemme 16. Bei einem passiven Klemmenantrieb 35 wird zumindest ein von der Führungsklemme 16 und dem Fördergurt 4 getrennter Bauteil benötigt.

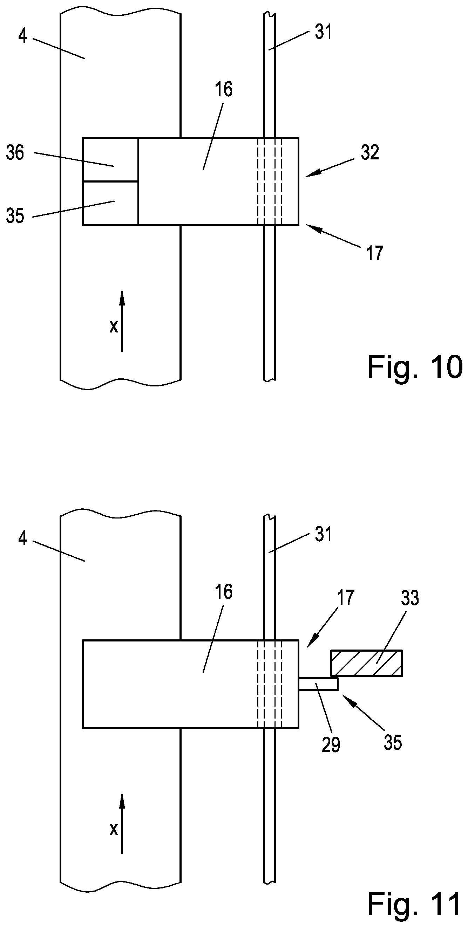

Ein aktiver Klemmenantrieb 35, wie beispielhaft in Fig.5 und Fig.10 dargestellt, besteht vorzugsweise aus einem Antrieb 36, der auf den bewegten Klemmenteil 17 wirkt, vorzugsweise über den Klemmenmechanismus 18. Der Antrieb 36 wirkt auf den bewegten Klemmenteil 17, der die Führungsklemme 16 öffnet oder schließt. Der Antrieb 36 wird von einem Energiespeicher mit Energie zum Öffnen oder Schließen der Führungsklemme 16 versorgt. Der Energiespeicher ist an der Führungsklemme 16 oder am Fördergurt 4, auch für mehrere Führungsklemmen 16, angeordnet. Der Antrieb 35 ist beispielsweise ein elektrischer, hydraulischer oder pneumatischer Antrieb und der Energiespeicher kann ein elektrischer, hydraulischer oder pneumatischer Energiespeicher sein. Ein elektrischer Energiespeicher kann beispielweise berührungslos, beispielsweise induktiv, und bei bewegtem Fördergurt 4 aufgeladen werden, beispielsweise an einer Stelle oder mehreren Stellen beim Umlauf des Fördergurtes 4.

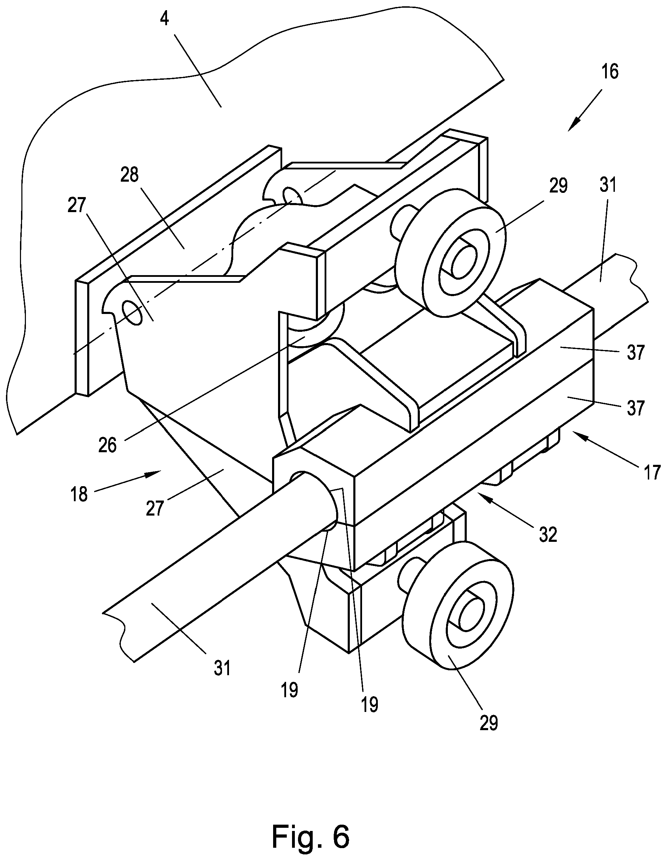

Bei einem passiven Klemmenantrieb 35, wie beispielsweise in Fig.6 oder Fig.11 dargestellt, ist an der Führungsklemme 16 ein Klemmenbetätigungsteil 29 vorgesehen, der zum Öffnen oder Schließen der Führungsklemme 16 mit einem stationären Betätigungsteil 33 der Fördereinrichtung 1 zusammenwirkt, wenn die Führungsklemme 16 mit dem Klemmenbetätigungsteil 29 am stationären Betätigungsteil 33 vorbeibewegt wird. Der Klemmenbetätigungsteil 29 ist beispielsweise ein Hebel, der am stationären Betätigungsteil 33 anliegt und umgelegt wird. Der Klemmenbetätigungsteil 29 kann aber auch eine Betätigungsrolle oder ein Gleitelement sein, die/das an einer Führungsfläche abrollt oder gleitet, um die Führungsklemme 16 zum Öffnen oder Schließen zu betätigen. Der Klemmenbetätigungsteil 29 wirkt bei Betätigung auf den bewegten Klemmenteil 17, um die Führungsklemme 16 zu öffnen oder zu schließen.

Eine Führungsklemme 16 umfasst in einer bevorzugten Ausgestaltung zwei Klemmbacken 37. Die Klemmbacken 37 sind beispielsweise auf dem Klemmmechanismus 18 angeordnet. Die Klemmbacken 37 sind, zumindest bei der geschlossenen Führungsklemme 16, einander gegenüberliegend angeordnet. Die Klemmbacken 37 können auf den sich gegenüberstehenden und einander zugewandten Backenflächen jeweils eine Backenausnehmung 19 haben, die bei geschlossener Führungsklemme 16 den Führungsbereich 32 ausbilden.

Die Klemmbacken 37 können mit dem Klemmenantrieb 35, gegebenenfalls auch über den Klemmmechanismus 18, in eine geschlossene Lage und eine geöffnete Lage gebracht werden. Hierfür ist zumindest eine Klemmbacke 37 bewegbar angeordnet, um den bewegten Klemmenteil 17 auszubilden. Die Bewegung der zumindest einen Klemmbacke 17 kann rotatorisch und/oder translatorisch sein.

In der geschlossenen Lage bilden die sich zugewandten Backenausnehmungen 19 einen Hohlraum, in dem ein Stützelement 31 angeordnet werden kann. In der geschlossenen Lage umgeben die Klemmbacken 37 im Führungsbereich 32 ein Stützelement 31, sofern vorhanden. Die Backenausnehmungen 19 sind derart dimensioniert, dass ein Stützelement 31 nicht geklemmt wird, sondern dass zwischen den Klemmbacken 37 und dem Stützelement 31 in der geschlossenen Lage hinreichendes Spiel vorhanden ist, sodass der Fördergurt 4 zwar geführt wird, aber die Klemmbacken 37 nicht ständig und übermäßig am Stützelement 31 schleifen.

Beispielsweise wird als Stützelement 31 ein Stahlseil mit einem Außendurchmesser verwendet. Die Backenausnehmungen 19 sind vorzugsweise halbzylinderförmig ausgebildet. In der geschlossenen Lage bilden die Backenausnehmungen 19 einen zylinderförmigen Hohlraum, dessen Durchmesser um einige Millimeter, beispielsweise 5mm, größer ist, als der Außendurchmesser des Stahlseils.

In der offenen Lage werden die Klemmbacken 37 durch den Klemmmechanismus 18 so weit voneinander entfernt, dass das Stützelement 31 freigegeben ist, sodass das Stützelement 31 in den Führungsbereich 32 der Klemmbacken 37 gelangen kann oder aus diesem entfernt werden kann.

Die Klemmbacken 37 sind vorzugsweise lösbar an der Führungsklemme 16, beispielsweise am Klemmmechanismus 18, angeordnet und vorzugsweise aus Kunststoff, einer Bronzelegierung oder einem anderen verschleißmäßig günstigen Material gefertigt, sodass die Klemmbacken 37 bei Verschleiß einfach getauscht werden können und ein Stützelement 31, beispielsweise ein Stahlseil, durch eine Klemmbacke 37 möglichst wenig Abnützung erfährt. Mit einer Klemmbacke 37 aus einem solchen Material kann eine mögliche oberflächliche Beschädigung oder Verschleiß des Stützelements 31 weitestgehend unterbunden werden.

Der bewegte Klemmenteil 17 kann aber auch als Verriegelungsteil ausgeführt sein, der bewegt wird, um die Führungsklemme 16 zu schließen oder zu öffnen. Beispielsweise könnte ein Verriegelungsteil, wie ein Verriegelungsbolzen, eine Ausnehmung für das Stützelement an der Führungsklemme 16 zum Schließen der Führungsklemme 16 verschließen. Das Verriegelungsteil könnte aber auch zwei Bauteile der Führungsklemme 16 zum Schließen miteinander verriegeln.

An der Führungsklemme 16 ist vorzugsweise zusätzlich ein Halteelement 26 vorgesehen, das mit einer Haltekraft so auf die Führungsklemme 16, beispielsweise auf den Klemmenmechanismus 18 oder den bewegten Klemmenteil 17, wirkt, dass die Führungsklemme 16 durch die Haltekraft selbsttätig in der geschlossenen oder geöffneten Lage der Führungsklemme 16 gehalten werden. Das Halteelement 26 kann als Spiralfeder, Drehstabfeder, Gasfeder, Gummielement usw. ausgeführt sein. Zum Betätigen der Führungsklemme 16 zum Öffnen oder Schließen der Führungsklemme 16 muss die Haltekraft des Halteelements 26 überwunden werden.

In Fig.6 ist ein Ausführungsbeispiel einer Führungsklemme 16 mit Klemmenmechanismus 18 dargestellt. Der Klemmenmechanismus 18 weist hierin zwei Klemmhebeln 27 auf, die an einem ersten Ende an einer Klemmenbasis 28 um eine Drehachse (strichpunktiert angedeutet) drehbar gelagert angeordnet sind. Über die Klemmenbasis 28 kann die Führungsklemme 16 am Fördergurt 4 befestigt werden. Am jeweils gegenüberliegenden zweiten Ende der Klemmhebeln 27 ist jeweils eine Klemmbacke 37 angeordnet. Dabei ist eine obere Klemmbacke 37 an dem unteren Klemmhebel 27 angeordnet und eine untere Klemmbacke 37 an dem oberen Klemmhebel 27. "Oben" und "unten" gibt dabei keine Orientierung oder Lage im Raum an, sondern dient nur der Erläuterung des Klemmenmechanismus 18. Durch die Anordnung werden die Klemmbacken 37 aneinandergedrückt, also in die geschlossene Lage gedrückt, wenn die Klemmhebeln 27 auseinandergedrückt werden. Zwischen den beiden Klemmhebeln 27 ist zusätzlich ein Halteelement 26, hier eine Spiralfeder, angeordnet und drückt die Klemmhebeln 27 auseinander.

An der Führungsklemme 16 sind Betätigungsrollen als Klemmenbetätigungsteil 29 des Betätigungsantriebs 35 für den Klemmmechanismus 18 vorgesehen. In diesem Ausführungsbeispiel ist an jedem Klemmhebel 27 eine Betätigungsrolle drehbar gelagert angeordnet. Ein Klemmhebel 27 hat am zweiten Ende, gegenüber der Drehachse zwei Hebelarme, zwischen denen der Führungsbereich 32 der Führungsklemme 16 vorgesehen ist. Am ersten Hebelarm ist eine Klemmbacke 37 angeordnet und am zweiten Hebelarm das Klemmenbetätigungsteil 29, hier jeweils eine Betätigungsrolle. Über das Klemmenbetätigungsteil 29, hier die Betätigungsrollen, können die beiden Klemmhebeln 27 zusammengedrückt werden, wodurch die Klemmbacken 37 voneinander wegbewegt werden, um den Klemmmechanismus 18 zum Öffnen der Führungsklemme 16 zu betätigen.

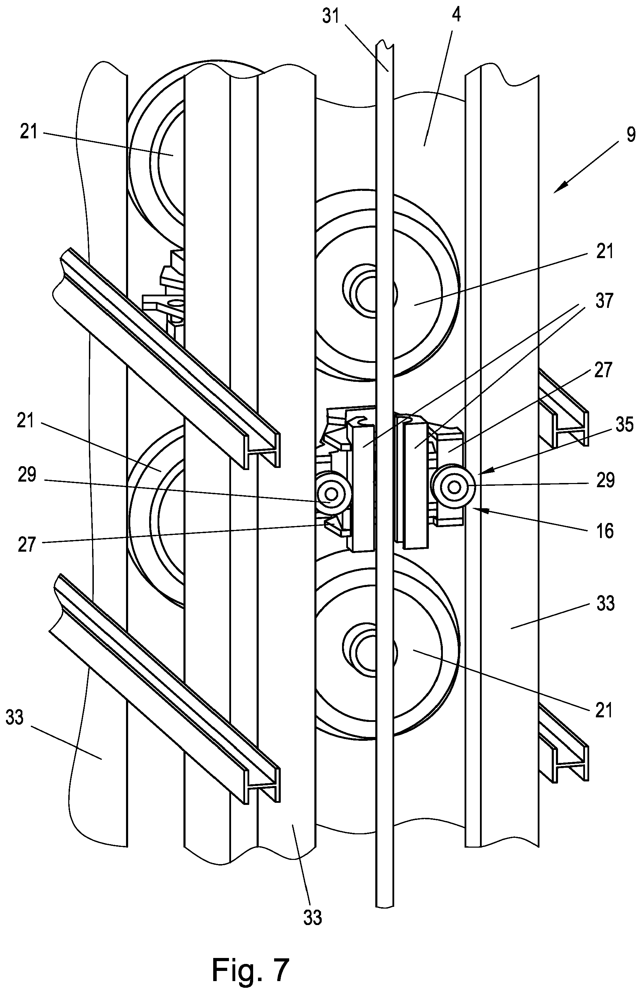

In Fig.7 ist die Führungsklemme 16 nach Fig.6 geöffnet dargestellt. Zum Betätigen des Klemmenbetätigungsteils 29, hier Betätigungsrollen wie mit Bezugnahme auf die Fig.6 beschrieben, ist an der Förderstrecke ein, bezogen auf den bewegten Fördergurt 4, stationärer Betätigungsteil 33 angeordnet. Im Ausführungsbeispiel nach Fig.7 ist der Betätigungsteil 33 als Betätigungsschiene ausgeführt, die sich axial in Förderrichtung x erstreckt. Im gezeigten Ausführungsbeispiel mit zwei Klemmenbetätigungsteilen 29 sind als stationärer Betätigungsteil 33 zwei einander gegenüberliegende Betätigungsschienen vorgesehen, je eine Betätigungsschiene pro Klemmenbetätigungsteil 29.

Eine Führungsklemme 16 am Fördergurt 4 wird im Umlauf um die Förderstrecke am stationären Betätigungsteil 33 vorbeigeführt. Im Bereich des stationären Betätigungsteils 33 kommt das Klemmenbetätigungsteil 29, hier die Betätigungsrolle, in Kontakt mit dem stationären Betätigungsteil 33 und wirkt damit zusammen, beispielsweise indem eine Betätigungsrolle auf einer zugeordneten Betätigungsschiene abrollt, um den Betätigungsantrieb 35 auszubilden.

Der stationäre Betätigungsteil 33 des Betätigungsantriebs 35 kann natürlich, in Abhängigkeit von der Ausgestaltung des Klemmenbetätigungsteils 29, auch auf verschiedenste Weise ausgeführt sein, beispielsweise als Schiene, als Führung oder als Anschlag, der einen Hebel umlegt.

In einer Ausgestaltung nach Fig.7 mit einer Führungsklemme 16 nach Fig.6 ist der Abstand der gegenüberliegenden Betätigungsschienen so gewählt, dass die Klemmhebeln 27 des Klemmmechanismus 18 durch die Betätigungsrollen zusammengedrückt werden, wodurch sich die Klemmbacken 37 auseinander und in die geöffnete Lage bewegen. Das Stützelement 31 ist damit freigegeben und kann in den Führungsbereich 32 gebracht werden (am Beginn des geführten Förderabschnitts 9) oder aus diesen entfernt werden (am Ende des geführten Förderabschnitts 9) und die Führungsklemme 16 kann geschlossen werden, beispielsweise selbsttätig durch das Halteelement 29 am Ende der Betätigungsschienen.

Ein Betätigungsteil 33 zum Betätigen des Klemmenbetätigungsteils 29 der Führungsklemme 16 ist damit an einem Beginn und/oder an einem Ende eines geführten Förderabschnitts 9 der Fördereinrichtung 1 vorgesehen. Für einen aktiven Klemmenantrieb 35 kann an einem Beginn und/oder an einem Ende eines geführten Förderabschnitts 9 der Fördereinrichtung 1 ein Signal an den Klemmenantrieb 35 gegeben werden, um diesen zum Öffnen oder Schließen der Führungsklemme 16 zu aktivieren.

Es ist offensichtlich, dass die Führungsklemme 16 mit dem Klemmmechanismus 18 und dem Klemmenbetätigungsteil 29 konstruktiv auf verschiedenste Weise ausgeführt sein kann, beispielsweise mit umgekehrter Kraftwirkung eines Halteelements 26, mit einem Zusammendrücken von Klemmhebeln 27 zum Schließen der Klemmbacken 17, mit einem anderen Klemmenbetätigungsteil 29, mit anderer Betätigung usw.

Es ist auch denkbar, dass nur ein Klemmhebel 27 drehbar gelagert ist und nur dieser drehbar gelagerte Klemmhebel 27 zum Öffnen und Schließen der Führungsklemme 16 mit dem Klemmenantrieb 35 bewegt wird, beispielsweise über den Klemmenbetätigungsteil 29. In diesem Fall wäre auch nur am bewegten Klemmhebel 27 ein Klemmenbetätigungsteil 29 erforderlich. Auch eine Ausführung mit einem Klemmhebel 27, der nicht drehbar gelagert ist, sondern anders durch den Klemmenantrieb 35, vorzugsweise über den Klemmmechanismus 18, bewegbar ausgeführt ist, beispielsweise verschiebbar, ist denkbar.

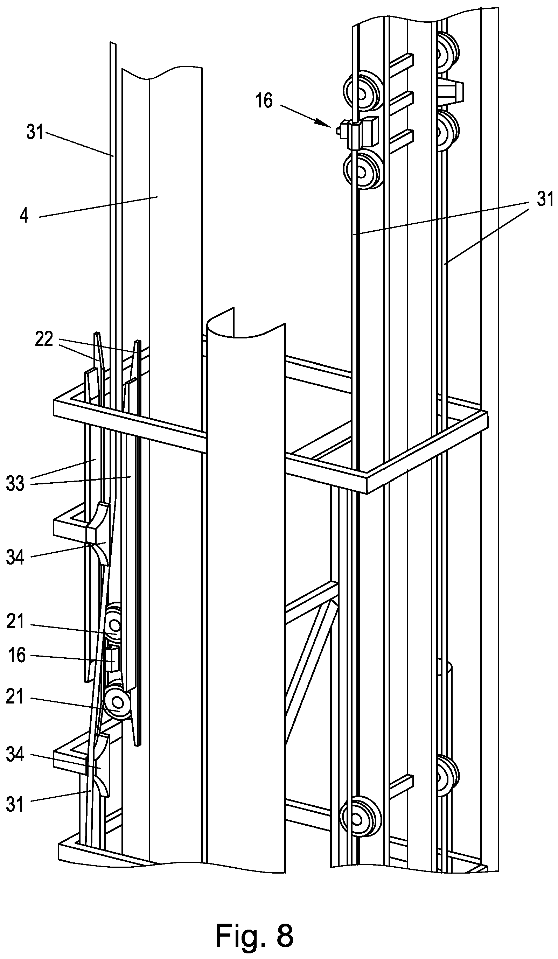

Mit Fig.8 wird erläutert, wie ein Stützelement 31 in den Führungsbereich 32 einer Führungsklemme 16 hinein oder daraus herausgebracht werden kann. Im Bereich einer Betätigungsschiene als Betätigungsteil 33 wird das Stützelement 31 in Querrichtung y umgelenkt und so aus dem oder in den Führungsbereich 32 der Führungsklemme 16 gebracht. Im Falle eines Seiles als Stützelement 31 können ortsfeste Umlenkteile 34 vorgesehen sein, die das Seil in Querrichtung y vom Fördergurt 4 weglenken. Ein Seil als Stützelement 31 wäre dabei beispielsweise im geführten Förderabschnitt 9 gespannt, beispielsweise zwischen ortsfest an der Förderstrecke angeordneten Abspannrahmen 40 (Fig.3 und Fig.4). Bei Bewegung des Fördergurtes 4 und durch die Umlenkung des Stützelements 31 wird die Führungsklemme 16 bei geöffneter Führungsklemme 16 selbsttätig vom Stützelement 31 wegbewegt.

Alternativ könnte auch der zumindest eine bewegte Klemmenteil 17 eine Relativbewegung zum Stützelement 31 ausführen, sodass das Stützelement 31 aus der oder in die Führungsklemme 16 geführt wird.

Am Ende (in Förderrichtung x gesehen) eines geführten Förderabschnitts 9 könnte ein Stützelement 31 auch einfach enden, insbesondere, wenn das Stützelement 31 als starrer Bauteil ausgeführt ist. Die geschlossene Führungsklemme 16 würde dann einfach vom Stützelement 31 wegfahren. Hierfür wäre auch kein Öffnen der Führungsklemme 16 erforderlich.

Um Schwingungen des Fördergurtes 4 durch die Betätigung der Führungsklemme 16, beispielsweise durch das Auffahren der Betätigungsrollen auf die Betätigungsschienen, zu unterdrücken, kann im Bereich der Betätigung der Führungsklemme 16, also beispielsweise im Bereich der Betätigungsschienen, auch ein Tragelement 22 vorgesehen sein, auf dem eine Tragrollen 21 des Fördergurtes 4 während der Betätigung der Führungsklemme 16 abrollt (Fig.8). In diesem Fall ist es vorteilhaft, wenn eine Tragrolle 21 am Fördergurt 4 unmittelbar vor und/oder nach einer Führungsklemme 16 (in Förderrichtung x gesehen) angeordnet ist.

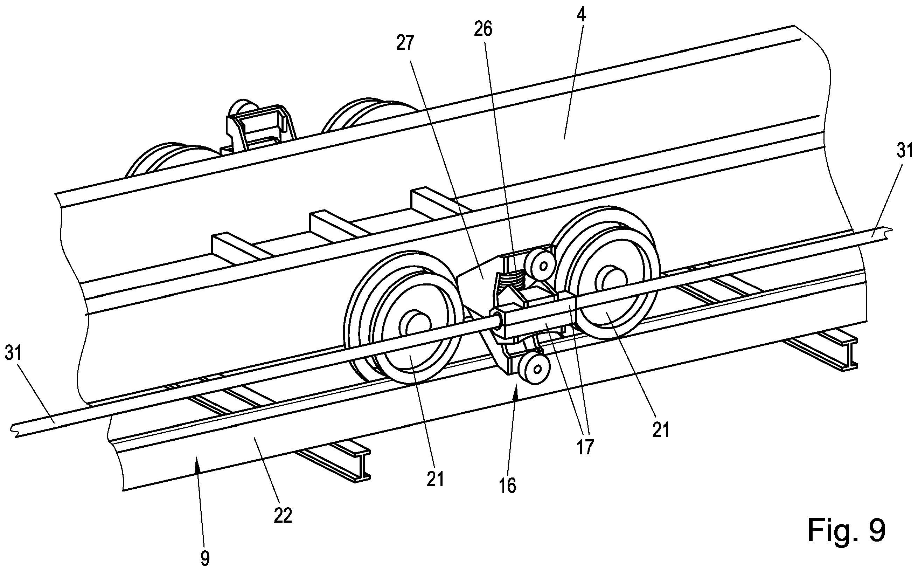

Fig.9 zeigt einen geführten Förderabschnitt 9, beispielsweise im Bereich einer Entladestation 3 oder Ladestation 2. Der geführte Förderabschnitt 9 ist im Wesentlichen horizontal ausgerichtet. Der Fördergurt 4 wird über die Tragrollen 21 auf Tragelementen 22, hier eine Schiene, bewegt, wobei die Tragrollen 21 auf den Tragelementen 22 abrollen. Gleichzeitig ist in dieser Ausgestaltung ein Stützelement 31 vorgesehen, beispielsweise ein Seil, über das der Fördergurt 4 mittels der Führungsklemmen 16 am Fördergurt 4 geführt wird. Auf diese Weise kann beispielsweise sicher verhindert werden, dass eine Tragrolle 21 vom Tragelement 22 springt und der Fördergurt 4 entgleist, was zu einem Notabschalten des Förderers führen kann.

Ein Halteelement 26 an einer Führungsklemme 16 zum geschlossen Halten der Führungsklemme 16 ist vorteilhaft so dimensioniert, dass sich die Führungsklemme 16 bei Bewegung des Fördergurtes 4 aufgrund von möglichen Schwingungen des Fördergurtes 4 nicht von alleine öffnet. Eine derartige Dimensionierung kann mit der Kenntnis der Konstruktion der Führungsklemme 16 und der wirkenden Kräfte einfach durchgeführt werden.

Ein Verschleiß an den Klemmbacken 17 kann auch durch Messtechnik überwacht werden, um einen notwendigen Tausch der Klemmbacken 17 zu veranlassen und eine Beschädigung eines Stützelements 31 zu verhindern. Auch das Stützelement 31 kann überwacht werden, beispielsweise durch eine am Fördergurt 4 mitfahrende Kamera, die das Stützelement 31 aufnimmt. Auch eine magnetinduktive Prüfung eines Stützelement 31, insbesondere im Falle eines Stahlseiles, ist denkbar.

## Patentansprüche

1. Fördereinrichtung (1) mit einem endlosen Fördergurt (4) an dem in Förderrichtung (x) des Fördergurtes (4) verteilt an beiden Seiten eine Vielzahl von Tragrollen (21) drehbar gelagert angeordnet sind, wobei Tragrollen (21) entlang einer Förderstrecke der Fördereinrichtung (1) zumindest abschnittsweise an Tragelementen (22) abrollen, wobei in einem geführten Förderabschnitt (9) der Fördereinrichtung (1) an zumindest einer Seite eines Obergurtes (11) und/oder Untergurtes (12) des Fördergurtes (4) ein Stützelement (31) vorgesehen ist, das sich im geführten Förderabschnitt (9) in Förderrichtung (x) erstreckt, wobei am Fördergurt (4) auf der Seite des Stützelements (31) zumindest eine Führungsklemme (16) angeordnet ist, die das Stützelement (31) in einer geschlossenen Lage in einem Führungsbereich (32) umgreift, und die das Stützelement (31) in einer offenen Lage freigibt, und wobei an der Führungsklemme (16) ein Klemmenantrieb (35) angeordnet ist, mit dem die Führungsklemme (16) in die offene oder geschlossene Lage bringbar ist, **dadurch gekennzeichnet, dass** zwischen dem Stützelement (31) und der geschlossenen Führungsklemme (16) im Führungsbereich (32) ein Spiel vorgesehen ist, sodass die Führungsklemme (16) ohne Einklemmen des Stützelements (31) am Stützelement (31) geführt ist.

2. Fördereinrichtung (1) nach Anspruch 1, **dadurch gekennzeichnet, dass** an der Führungsklemme (16) ein bewegter Klemmenteil (17) vorgesehen ist, wobei der Klemmenantrieb (35) zum Öffnen oder Schließen der Führungsklemme (16) den bewegten Klemmenteil (17) bewegt.

3. Fördereinrichtung (1) nach Anspruch 1 oder 2, **dadurch gekennzeichnet, dass** an der Führungsklemme (16) ein Klemmenmechanismus (18) vorgesehen ist, wobei der Klemmenantrieb (35) zum Öffnen oder Schließen der Führungsklemme (16) auf den Klemmenmechanismus (18) wirkt.

4. Fördereinrichtung (1) nach Anspruch 2 und 3, **dadurch gekennzeichnet, dass** der bewegte Klemmenteil (17) am Klemmenmechanismus (18) angeordnet ist.

5. Fördereinrichtung (1) nach einem der Ansprüche 2 bis 4, **dadurch gekennzeichnet, dass** der Klemmenantrieb (35) einen Antrieb (36) umfasst, der zum Öffnen oder Schließen der Führungsklemme (16) auf den bewegten Klemmenteil (17) wirkt.

6. Fördereinrichtung nach Anspruch 5, **dadurch gekennzeichnet, dass** ein Energiespeicher vorgesehen ist, der den Antrieb (36) mit Energie zum Öffnen oder Schließen der Führungsklemme (16) versorgt.

7. Fördereinrichtung (1) nach einem der Ansprüche 2 bis 4, **dadurch gekennzeichnet, dass** der Klemmenantrieb (35) einen Klemmenbetätigungsteil (29) an der Führungsklemme (16) umfasst, der zum Öffnen oder Schließen der Führungsklemme (16) auf den bewegten Klemmenteil (17) wirkt **und dass** im geführten Förderabschnitt (9) der Fördereinrichtung (1) ein stationärer Betätigungsteil (33) vorgesehen ist, der beim Vorbeibewegen der Führungsklemme (16) am stationären Betätigungsteil (33) mit dem Klemmenbetätigungsteil (29) zusammenwirkt, um den Klemmenbetätigungsteil (29) zum Öffnen oder Schließen der Führungsklemme (16) zu betätigen.

8. Fördereinrichtung (1) nach Anspruch 7, **dadurch gekennzeichnet, dass** der Klemmenbetätigungsteil (29) als zumindest eine drehbar an der Führungsklemme (16) gelagerte Betätigungsrolle oder als Gleitelement ausgeführt ist und der stationäre Betätigungsteil (33) als sich in Förderrichtung (x) erstreckende Betätigungsschiene ausgeführt ist, an der die Betätigungsrolle abrollt oder das Gleitelement abgleitet.

9. Fördereinrichtung (1) nach Anspruch 7 oder 8, **dadurch gekennzeichnet, dass** im Bereich des stationären Betätigungsteils (33) ein Tragelement (22) vorgesehen ist, auf dem eine Tragrolle (21) des Fördergurtes (4) abrollt, wenn der Klemmenbetätigungsteil (29) mit dem Betätigungsteil (33) zusammenwirkt.

10. Fördereinrichtung (1) nach einem der Ansprüche 2 bis 9, **dadurch gekennzeichnet, dass** die Führungsklemme (16) zwei Klemmbacken (37) umfasst, wobei die Klemmbacken (37) einander gegenüberliegend angeordnet sind, **und dass** zumindest eine der Klemmbacken (37) als bewegter Klemmenteil (17) ausgeführt ist und mit dem Klemmenantrieb (35) in die geschlossene Lage, in der die Klemmbacken (37) das Stützelement (31) umgreifen, und in die geöffnete Lage, in der die Klemmbacken (37) das Stützelement (31) freigeben, bringbar ist.

11. Fördereinrichtung (1) nach Anspruch 10, **dadurch gekennzeichnet, dass** an sich gegenüberstehenden und einander zugewandten Backenflächen der Klemmbacken (37) jeweils eine Backenausnehmung (19) vorgesehen ist, die den Führungsbereich (32) der Führungsklemme (16) ausbilden und das Stützelement (31) in der geschlossenen Lage in den Backenausnehmungen (19) der Klemmbacken (37) angeordnet ist.

12. Fördereinrichtung (1) nach einem der Ansprüche 1 bis 11, **dadurch gekennzeichnet, dass** an der Führungsklemme (16) ein Halteelement (26), vorzugsweise ein Federelement, vorgesehen ist, das die Führungsklemme (16) durch eine Haltekraft, vorzugsweise eine Federkraft, des Halteelements (26) selbsttätig in der geschlossenen oder offenen Lage hält.

13. Fördereinrichtung (1) nach einem der Ansprüche 10 bis 12, **dadurch gekennzeichnet, dass** der Klemmenmechanismus (18) zumindest einen Klemmhebel (27) aufweist, wobei der zumindest eine Klemmhebel (27) an einem ersten Ende an einer Klemmenbasis (28) der Führungsklemme (16) um eine Drehachse drehbar gelagert angeordnet ist und am jeweils gegenüberliegenden zweiten Ende des zumindest einen Klemmhebels (27) der bewegte Klemmenteil (17), vorzugsweise eine Klemmbacke (37), angeordnet ist.

14. Fördereinrichtung (1) nach Anspruch 12 und 13, **dadurch gekennzeichnet, dass** das Halteelement (26) auf den zumindest einen Klemmhebel (27) wirkt.

15. Fördereinrichtung (1) nach Anspruch 13 oder 14, **dadurch gekennzeichnet, dass** am zweiten Ende des zumindest einen Klemmhebels (27) zwei Hebelarme vorgesehen sind, zwischen denen der Führungsbereich (32) der Führungsklemme (16) ausgebildet ist und an einem ersten Hebelarm der bewegte Klemmenteil (17), vorzugsweise eine Klemmbacke (37), angeordnet ist und an einem zweiten Hebelarm der Klemmenbetätigungsteil (29) zum Betätigen der Führungsklemme (16) angeordnet ist.

## Claims

1. Conveying device (1) with an endless conveyor belt (4) on which a plurality of support rollers (21) are rotatably mounted on both sides distributed in the conveying direction (x) of the conveyor belt (4), wherein support rollers (21) roll at least in part on support elements (22) along a conveying path of the conveying device (1), wherein in a guided conveyor portion (9) of the conveying device (1), a supporting element (31) is provided on at least one side of an upper belt (11) and/or lower belt (12) of the conveyor belt (4), which supporting element extends in the conveying direction (x) in the guided conveyor portion (9), wherein at least one guide clamp (16) is arranged on the conveyor belt (4) on the side of the supporting element (31), which guide clamp encompasses the supporting element (31) in a closed position in a guide region (32) and which guide clamp releases the supporting element (31) in an open position, wherein a clamp drive (35) is arranged on the guide clamp (16), with which the guide clamp (16) can be brought into the open or closed position, **characterized in that** play is provided between the supporting element (31) and the closed guide clamp (16) in the guide region (32), so that the guide clamp (16) is guided on the supporting element (31) without clamping the supporting element (31).

2. Conveying device (1) according to claim 1, **characterized in that** a moving clamp part (17) is provided on the guide clamp (16), wherein the clamp drive (35) moves the moving clamp part (17) to open or close the guide clamp (16).

3. Conveying device (1) according to claim 1 or 2, **characterized in that** a clamping mechanism (18) is provided on the guide clamp (16), wherein the clamp drive (35) acts upon the clamping mechanism (18) to open or close the guide clamp (16).

4. Conveying device (1) according to claims 2 and 3, **characterized in that** the moving clamping part (17) is arranged on the clamping mechanism (18).

5. Conveying device (1) according to any of claims 2 to 4, **characterized in that** the clamp drive (35) comprises a drive (36) which acts upon the moving clamp part (17) to open or close the guide clamp (16).

6. Conveying device according to claim 5, **characterized in that** an energy storage device is provided which supplies the drive (36) with energy for opening or closing the guide clamp (16).

7. Conveying device (1) according to any of claims 2 to 4, **characterized in that** the clamp drive (35) comprises a clamp actuating part (29) on the guide clamp (16), which acts upon the moving clamp part (17) to open or close the guide clamp (16) **and that**, in the guided conveyor portion (9) of the conveying device (1), a stationary actuating part (33) is provided which, when the guide clamp (16) moves past the stationary actuating part (33), cooperates with the clamp actuating part (29) in order to actuate the clamp actuating part (29) to open or close the guide clamp (16).

8. Conveying device (1) according to claim 7, **characterized in that** the clamp actuating part (29) is designed as at least one actuating roller rotatably mounted on the guide clamp (16) or as a sliding element, and the stationary actuating part (33) is designed as an actuating rail extending in the conveying direction (x), on which the actuating roller rolls or the sliding element slides.

9. Conveying device (1) according to claim 7 or 8, **characterized in that**, in the region of the stationary actuating part (33), a support element (22) is provided, on which a support roller (21) of the conveyor belt (4) rolls when the clamp actuating part (29) interacts with the actuating part (33).

10. Conveying device (1) according to any of claims 2 to 9, **characterized in that** the guide clamp (16) comprises two clamping jaws (37), wherein the clamping jaws (37) are arranged opposite one another, **and that** at least one of the clamping jaws (37) is designed as a moving clamping part (17) and can be brought by the clamp drive (35) into the closed position in which the clamping jaws (37) encompass the supporting element (31), and into the open position in which the clamping jaws (37) release the supporting element (31).

11. Conveying device (1) according to claim 10, **characterized in that**, on opposing and mutually facing jaw surfaces of the clamping jaws (37), there is in each case provided a jaw recess (19) which form the guide region (32) of the guide clamp (16), and the supporting element (31) in the closed position is arranged in the jaw recesses (19) of the clamping jaws (37).

12. Conveying device (1) according to any of claims 1 to 11, **characterized in that**, on the guide clamp (16), a holding element (26), preferably a spring element, is provided, which automatically holds the guide clamp (16) in the closed or open position by a holding force, preferably a spring force, of the holding element (26).

13. Conveying device (1) according to any of claims 10 to 12, **characterized in that** the clamping mechanism (18) has at least one clamping lever (27), wherein the at least one clamping lever (27) is arranged at a first end on a clamp base (28) of the guide clamp (16) so as to be rotatable about a rotation axis, and the moving clamping part (17), preferably a clamping jaw (37), is arranged at the respective opposite second end of the at least one clamping lever (27).

14. Conveying device (1) according to claims 12 and 13, **characterized in that** the holding element (26) acts upon the at least one clamping lever (27).

15. Conveying device (1) according to claim 13 or 14, **characterized in that**, at the second end of the at least one clamping lever (27), two lever arms are provided, between which the guide region (32) of the guide clamp (16) is formed, and the moved clamp part (17), preferably a clamping jaw (37), is arranged on a first lever arm, and the clamp actuating part (29) for actuating the guide clamp (16) is arranged on a second lever arm.

## Revendications

1. Dispositif de transport (1) comportant une bande transporteuse (4) sans fin sur laquelle sont disposés, de manière à être montés en rotation, une pluralité de galets porteurs (21) répartis des deux côtés dans la direction de transport (x) de la bande transporteuse (4), dans lequel des galets porteurs (21) roulent, au moins dans certaines sections, sur des éléments porteurs (22) le long d'une voie de transport du dispositif de transport (1), dans lequel un élément de support (31) est prévu, dans une section de transport guidée (9) du dispositif de transport (1), sur au moins un côté d'un brin supérieur (11) et/ou d'un brin inférieur (12) de la bande transporteuse (4), lequel élément de support s'étend dans la section de transport guidée (9) dans la direction de transport (x), dans lequel au moins une pince de guidage (16) est disposée sur la bande transporteuse (4) sur le côté de l'élément de support (31), laquelle pince de guidage vient en prise autour de l'élément de support (31) dans une position fermée dans une zone de guidage (32), et libère l'élément de support (31) dans une position ouverte, et dans lequel un entraînement de pince (35) est disposé sur la pince de guidage (16), grâce auquel la pince de guidage (16) peut être amenée dans la position ouverte ou fermée, **caractérisé en ce qu'**un jeu est prévu entre l'élément de support (31) et la pince de guidage (16) fermée dans la zone de guidage (32), de sorte que la pince de guidage (16) est guidée sur l'élément de support (31) sans serrage de l'élément de support (31).

2. Dispositif de transport (1) selon la revendication 1, **caractérisé en ce qu'**une partie de pince mobile (17) est prévue sur la pince de guidage (16), dans lequel l'entraînement de pince (35) déplace la partie de pince mobile (17) pour ouvrir ou fermer la pince de guidage (16).

3. Dispositif de transport (1) selon la revendication 1 ou 2,
**caractérisé en ce qu'**un mécanisme de pince (18) est prévu sur la pince de guidage (16), dans lequel l'entraînement de pince (35) agit sur le mécanisme de pince (18) pour ouvrir ou fermer la pince de guidage (16).

4. Dispositif de transport (1) selon les revendications 2 et 3,
**caractérisé en ce que** la partie de pince mobile (17) est disposée sur le mécanisme de pince (18).

5. Dispositif de transport (1) selon l'une des revendications 2 à 4,
**caractérisé en ce que** l'entraînement de pince (35) comprend un entraînement (36) qui agit sur la partie de pince mobile (17) pour ouvrir ou fermer la pince de guidage (16).

6. Dispositif de transport selon la revendication 5, **caractérisé en ce qu'**un accumulateur d'énergie est prévu, lequel alimente l'entraînement (36) en énergie pour ouvrir ou fermer la pince de guidage (16).

7. Dispositif de transport (1) selon l'une des revendications 2 à 4,
**caractérisé en ce que** l'entraînement de pince (35) comprend une partie d'actionnement de pince (29) sur la pince de guidage (16), laquelle partie d'actionnement de pince agit sur la partie de pince mobile (17) pour ouvrir ou fermer la pince de guidage (16), **et en ce qu'**une partie d'actionnement fixe (33) est prévue dans la section de transport guidée (9) du dispositif de transport (1), laquelle partie d'actionnement fixe, lors du déplacement de la pince de guidage (16) devant la partie d'actionnement fixe (33), coopère avec la partie d'actionnement de pince (29) pour actionner la partie d'actionnement de pince (29) afin d'ouvrir ou de fermer la pince de guidage (16).

8. Dispositif de transport (1) selon la revendication 7, **caractérisé en ce que** la partie d'actionnement de pince (29) est réalisée sous la forme d'au moins un galet d'actionnement monté en rotation sur la pince de guidage (16) ou sous la forme d'un élément glissant, et la partie d'actionnement fixe (33) est réalisée sous la forme d'un rail d'actionnement s'étendant dans la direction de transport (x), sur lequel roule le galet d'actionnement ou sur lequel glisse l'élément glissant.

9. Dispositif de transport (1) selon la revendication 7 ou 8,
**caractérisé en ce qu'**un élément porteur (22) est prévu dans la zone de la partie d'actionnement fixe (33), sur lequel roule un galet porteur (21) de la bande transporteuse (4) lorsque la partie d'actionnement de pince (29) coopère avec la partie d'actionnement (33).

10. Dispositif de transport (1) selon l'une des revendications 2 à 9, **caractérisé en ce que** la pince de guidage (16) comprend deux mâchoires de serrage (37), dans lequel les mâchoires de serrage (37) sont disposées en regard l'une de l'autre, **et en ce qu'**au moins l'une des mâchoires de serrage (37) est réalisée sous forme de partie de pince mobile (17) et peut être amenée, par l'entraînement de pince (35), dans la position fermée, dans laquelle les mâchoires de serrage (37) viennent en prise autour de l'élément de support (31), et dans la position ouverte, dans laquelle les mâchoires de serrage (37) libèrent l'élément de support (31).

11. Dispositif de transport (1) selon la revendication 10, **caractérisé en ce que**, sur des surfaces de mâchoires des mâchoires de serrage (37) qui sont en vis-à-vis et sont tournées l'une vers l'autre, est prévu respectivement un évidement de mâchoire (19) qui forme la zone de guidage (32) de la pince de guidage (16) et l'élément de support (31) est disposé, dans la position fermée, dans les évidements de mâchoires (19) des mâchoires de serrage (37).

12. Dispositif de transport (1) selon l'une des revendications 1 à 11, **caractérisé en ce qu'**un élément de retenue (26), de préférence un élément élastique, est prévu sur la pince de guidage (16), lequel retient automatiquement la pince de guidage (16) dans la position fermée ou ouverte grâce à une force de retenue, de préférence une force élastique, de l'élément de retenue (26).

13. Dispositif de transport (1) selon l'une des revendications 10 à 12, **caractérisé en ce que** le mécanisme de pince (18) présente au moins un levier de serrage (27), dans lequel l'au moins un levier de serrage (27) est disposé, de manière à être monté en rotation autour d'un axe de rotation, à une première extrémité sur une base de pince (28) de la pince de guidage (16), et la partie de pince mobile (17), de préférence une mâchoire de serrage (37), est disposée à la seconde extrémité respectivement opposée de l'au moins un levier de serrage (27).

14. Dispositif de transport (1) selon les revendications 12 et 13,
**caractérisé en ce que** l'élément de retenue (26) agit sur l'au moins un levier de serrage (27).

15. Dispositif de transport (1) selon la revendication 13 ou 14,
**caractérisé en ce qu'**à la seconde extrémité de l'au moins un levier de serrage (27) sont prévus deux bras de levier entre lesquels est formée la zone de guidage (32) de la pince de guidage (16) et sur un premier bras de levier est disposée la partie de pince mobile (17), de préférence une mâchoire de serrage (37), et sur un second bras de levier est disposée la partie d'actionnement de pince (29) destinée à actionner la pince de guidage (16).
